# EUROPEAN PATENT SPECIFICATION

(11) **EP 1 236 688 B1**
(45) Date of publication and mention of the grant of the patent: **13.10.2004**
(21) Application number: 99958188.7
(22) Date of filing: 12.11.1999
(51) Int. Cl.: C02F 3/30, C02F 3/28

(54) **BIOLOGICAL PURIFICATION PLANT FOR RESIDUAL WATERS EQUIPPED WITH ANAEROBIC DIGESTORS AND PURIFICATION PROCESS**
BIOLOGISCHE REINIGUNGSANLAGE FÜR ABWASSER MIT ANAEROBEM FAULBEHÄLTER UND REINIGUNGSVERFAHREN
CENTRALE D'EPURATION BIOLOGIQUE D'EAUX RESIDUELLES EQUIPEE DE DIGESTEURS ANAEROBIES ET PROCEDE D'EPURATION

(43) Date of publication of application: 04.09.2002
(73) Proprietor: Insertam S.L., 33403 Aviles (ES)
(72) Inventor: FIESTAS ROS DE URSINOS, Jose Antonio, E-33403 Aviles (ES); GARCIA DIAZ, Rafael, E-33403 Aviles (ES); VALDES GARCIA, Julio Francisco, E-33403 Aviles (ES)
(86) International application number: PCT/ES1999/000367
(87) International publication number: WO 2001/036340

(56) References cited:
- EP-A2- 0 846 664
- DE-A1- 19 804 007
- ES-A6- 2 005 754
- ES-B3- 2 022 736

## Description

### Background to the previous technical situation

In the processes of the biological treatment of wastewater that contains organic wastes coming from livestock farming or from human populations with the use of reactors or high-speed anaerobic digesters there are two known types of reactor:
a) Anaerobic accumulation reactor, that in turn may be:
   - Contact Reactor
   - Central Activity Digester ( D.A.C. System)
b) Fixed bed or mobile bed anaerobic reactor, which in turn can be divided into the following systems:
   - Upflow anaerobic sludge blanket (UASB)
   - Fluid or expanded bed reactor (BIOFLUID System)
   - Anaerobic filters
   - Two phase reactors

The Contact Reactor is a single reactor that is fitted with devices which permit continuous feed, shaking with homogenisation of digester contents and the possibility of obtaining longer solid residence times (bacterial biomass) than hydraulic residence times, due to internal or external concentration and recirculation systems of solids.

Nevertheless, bacterial concentration in a single digester does not solve the serious problem of the adaptation of the methanogenic bacteria to the pH levels of the organic load, their different fixation demands and their different rate of reproduction, which inevitably gives rise to an important process performance loss, both in the treatment, as well as in the secondary energetic production capacity before the presence of conditions hostile to said bacteria, which are, on the other hand, essential in the process. In fact, the microbacterial equilibrium of the biomass is essential to the process in order that the same volume of organic load to be treated, is digested in coherent time by the acidogenic bacteria (hydrolytic and fermentative), and the methanogenic bacteria (acetoclastic and hydrogenophile), and an overmass of acidogenic bacteria with respect to the methanogenic bacterial biomass not only destabilises the process, as a result of the amount of efficiency lost due to not being able to eliminate the various components of the waste within a suitable time period, but it also destabilises the methanogenic bacteria, giving rise to a progressive inhibition of these, as a result of which it initiates a progressive regression of bacterial activity.

In the same way, the D.A.C. System, although it increases the performance of the Contact Reactor with an internal decanter that assures a greater bacterial biomass concentration in the interior, and enables the precipitation of easily sedimentable inert material, does not solve the problem of cohabitation in the same heterogeneous bacterial Digester with the contrary habitat demands, thus it operates with a HTR or Hydraulic Time Residence which, according to the studies carried out, with a working volume of 500m³ of the Digester is situated in or around 12.5 days for a volume of wastewater to be treated to the order of 40m³/per day with an average treatment efficiency level in soluble COD % (Chemical Oxygen Demand) of 95.7, and in eliminated VS % (Volatile Solids) of 76.7 and a production of 156,200m³ of Biogas per year, which indicates an insufficient performance of the system, therefore the duration of the HTR carries with it the need to invest in a high working volume Reactor in relation to the incoming flow per day (500 m³ of volume for a daily flow of 40 m³), which means an extremely high initial investment in fixed capital and a relatively low efficiency, given the duration in days of the process (12.5 days).

The system known as UPFLOW ANAEROBIC SLUDGE BLANKET (UASB) improves performance as a result of a granulation of the anaerobic biomass and the use of sludge bed, but the bacterial concentration of a single Reactor does not solve the problem of the relative incompatibility in the habitat between the bacteria, their different rate of reproduction and their different pH sensitivity, thus variations in the entry load, in their organic composition or in the environmental conditions produce substantial unstable variations in the performance of the process.

The Fluid or Fluidised Bed Reactors or Expanded Bed Reactors are suitable for increasing the fixation of the methanogenic bacteria by adhesion to inert materials in suspension, such as sand, carbon dust, silicates, carbonates, glasses, plastics or others. Among the aforementioned, worthy of note is the system -known as BIOFLUID of Fluidised bed which increases the performance of anaerobic digestion with adjustment of the area/volume ratio and with the consequent decrease in the concentration of CO₂ in the Reactor liquid, which also simplifies the temperature control of the process, and by means of the selection of easily fluidised micronized supports, not only decreases the energy consumption of the Reactor, but also favours the selective development of the bacteria essentially by virtue of the wastewater to be treated.

In the same way, they form part of the technological state of the anaerobic filters of inert materials arranged on films, rings or spheres, placed at random or in modular configuration, and which can operate with AF up-flow or DSFF down-flow feed flows, that make the formation of a bacterial biofilm easier, and above all, the Reactor called the Two Phase Reactor, characterised by uniting in a single container or Reactor, internally differentiating the process, a hydrolytic and acidogenic phase, which operates with a DSFF Reactor, and a Methanogenic Phase which uses a Fluidised Bed or Expanded Reactor, together making up a single High-speed Reactor, with two differentiated internal phases, capable of achieving the best performance and efficiency rates known in the technological state prior to the present invention.

Significant works are those of IZA, COLLERAN and others, "International Workshop on Anaerobic Treatment Technology for Municipal and Industrial Wastewater", KENNEDY, K.J. and DROSTE R.L. "Anaerobic Wastewater Treatment in Downflow Stationary Fixed Film Reactors" and WEILAND, P. and ROZZI, A.

"The start-up operation and monitoring of high- rate anaerobic treatment systems" and in Spain FIESTAS J.A. "Anaerobic reactors for the treatment of industrial and urban waters" ( 1.996).

The most significant feature of the previous technological state in relation to the invention that is being proposed is that, to date, there is no anaerobic treatment procedure that integrally resolves the habitat incompatibility problem between methanogenic and acidogenic bacteria that comes about due to their distinct sensitivity pH, their different rate of reproduction and the disparity of the fixation beds that each type of these bacteria need, given that, even the two phase Reactor is a single bodied device that internally brings together, still with a relative discrimination, the acid pH conditions and the presence of heavy metals that inhibit the methanogenic bacteria from the microbacterial habitat, which gives rise to an unresolved instability of the treatment process and a loss of efficiency, both in outflow spill capacity, as well as in hydraulic time residence (HTR) in comparison to the invention under proposal, with the consequent relative increase of the need for fixed capital investment which implies the previously familiar larger sized Reactor as compared to the system that is being proposed.

### Disclosure of the invention

The technological problem that has not been resolved due the previous technological situation is that the single Reactors, including the two phase reactors, do not avoid the presence of heavy metals and pH acid in the medium which inhibit the action of the acetoclastic and hydrogenophile bacteria, which in turn produces a destabilisation tendency of the system given that the inhibition of the methanogenic bacteria produces, as a result, a relative overpopulation of acidogenic bacteria which, as a result of being in turn, highly reproductive, gives rise to a progressively growing spiral of inhibition of the methanogenic bacteria and of the acetoclastic and hydrogenophile phase of methane production, to the point of collapsing the system, as a result of the sequential incompletion of the process which needs the combined action of the four groups of bacteria described.

In fact, the acidogenic bacteria break the polymers or long-chained fatty acids which allows for the release of metals that react with carbonates and other non-soluble compounds and precipitate by gravity and reduce the pH of the spill releasing short-chained acids (acetic acid and others). Therefore, if an adequately sized acidogenic bacterial population is assured in a first independent Digester or Reactor, with respect to the bacterial population of the second Reactor, it is possible to get the wastewater spill to the second reactor already treated for heavy metals by precipitation in the first reactor and with a pH of 6.5 and 7.5, which is that permitted by methanogenic bacteria. Moreover, although, these latter, within certain limits, have a certain reaction capacity before the hostile pH acid to the point of neutralising it, we have shown that they lose a high rate of activity and time in that adaptation process, which goes to destabilise the process which demands an adequate sequential synchronisation in coherent time of the bacterial action, ending up in a system crisis.

The invention under proposal is a combined double reactor system consisting of a procedure, and the installation necessary for said procedure, that resolves, after a process of investigation that has lasted for over two years, the incompatibility of habitat between, on the one hand, acidogenic bacteria, and methanogenic bacteria, on the other. It does so by means of their separation in two sealed independent anaerobic Reactors or Digesters, the first of fixed bed, which fixes the acidogenic bacteria, and the second of fluidised bed which fixes the methanogenic bacteria in such technological terms that guarantee that only wastewater from the spill that has been treated for heavy metals and with neutral pH reaches the second Reactor or Digester, thus eliminating the elements that are hostile to the methanogenic bacteria, optimising the reproduction and activity conditions of the bacterial population of the second reactor. Due to their design, both reactors are capable of operating in a combined manner in a self-regulating single process, permitting the performance optimisation of each group of bacteria by means of the independent fixation of each group in a specialised Reactor or Digester with optimal selective conditions of microbacterial habitat, resolving, at the same time, the communication between them by overflow, the precipitation of metals and non-biodegradable substances so that the may be used as fertiliser, the recirculation in each reactor to increase the intensity of the process, the production of biogas and of energy, the formation of environmentally clean sub-products - primarily fertiliser - , susceptible to independent exploitation, the denitration of the spill and the optimum quality of the treated inflow, with a drastic reduction of the Hydraulic Residence Time (HTR) and a proportional increase in the speed of the treatment and the consequent decrease of the size of the reactors and of the fixed capital investment in each one of them, which compensates for this fact the duplication of the digester device, being capable of reaching a Hydraulic Residence Time (HTR) of between 1-3 days, as long as the volume of the Digesters is suitably proportionate to the flow and the incoming load (the approximate volume of the first Reactor has to be between 1.5 and 3 times the flow volume to be treated per day, and the appropriate volume of the second Reactor 1.5 times the volume of the first Reactor, the latter containing bacterial biomass with a slower rate of reproduction, with the aim in mind of assuring the microbacterial stability of the system).

The sequential essence of the process is that the first hermetically sealed Reactor, fitted with hydraulic safety locks to allow for the release of the of the biogas pressure if necessary, contains the highly reproductive acidogenic bacteria (equal to or less than 24 hours) fixed by means of a Fixed Bed made of fired clay arranged on a meshed tray parallel to the bottom base (mixed or not with ecume de mer or whiting in order to optimise the fixation), hanging from the upper base by means of its fastening to an inverse decantation wall, which is fitted with a heater circuit, designed to be common to both Reactors, suitable for maintaining constant temperatures of between 32°C and 35°C admitting ranges of between 25°C and 35°C that are optimal for microbacterial development, and that is self-supplied from the biogas that is produced by the process, and whose inferior base must be sufficiently inclined so as to permit the precipitation of the metals released by the digesting action of the acidogenic bacteria and of other non-biodegradable products, precipitation which is produced by gravity and sedimentation, given that said heavy metals are also harmful for the bacteria of the second Reactor, their elimination contributes to the stabilisation of the process.

In order to assure that the decanted water which proceeds from the first reactor in the direction of the second reactor has neutral pH, and is freed of the heavy metals so harmful to the bacteria of the second reactor, the essential characteristics of the first reactor that is being proposed are the following:
a) It is of suitable size in relation to the spill volume of the wastewater inflow (The volume or capacity of this first reactor has to be between 1.5 and 3 times the volume of the daily inflow spill, which demands that the possible instabilities in incoming volume be controlled by means of a pre-storage tank which is also suitable for the homogenisation of the particles of the organic material.
b) The invention being proposed homogenises the size of the organic particles to in or around 3-mm before their entry into the first Reactor. This is brought about by means of a homogenisation reservoir fitted with an agitator in order to avoid irregularities in the formation of the size of the solids and which is fitted with a circuit, which has a strainer in the conduit which carries the spill to the first reactor, a filter that guarantees, by means of discrimination, organic particles of in or around 3 mm, returning those that are bigger to the homogenisation reservoir by means of a closed circuit. The homogenisation of the size of the organic particles in suspension significantly facilitates the rapid action of the acidogenic bacteria.
c) The first reactor is fitted with a fixed bed made of fired clay placed on a mesh plate at medium height in order to facilitate the circulation between its holes of the spill water, and is the ideal medium of fixation for the acidogenic bacteria.
d) The placing of the fixed bed plate with holes parallel to the larger lower base and at a certain height to permit the circulation of the water, results in the fact that the carbonates or insoluble compounds, which come from the reaction of the heavy metals once the polymer chains have been broken and the acidogenic bacterial action has finished, sediment by gravity over the larger lower base, which has to be sufficiently inclined towards an elimination register of the precipitates, which expulses them as auxiliary sub-products into a fertiliser deposit. In this way, we are guaranteed that the greater density of the heavy metals impedes their passage by decantation to the second reactor. In the drawing a precipitate heavy metal extraction pump is shown at the larger lower base of the Reactor for their elimination to a collateral fertiliser deposit, but said elimination system of the heavy metals may be substituted by a physical register.
e) With the aim in mind of favouring decantation, resolving the problem of supporting the mesh plate at medium height from the fixed base, and permitting the elimination by gravity of the heavy precipitate metals on the larger lower base, a plate supporting partition is used, which is, at the same time, an inverse decantation wall hanging from the larger upper base, thus enabling the fastening of the plate, the circulation of the water, the passage of the metals towards their elimination register by the inclined plane of the base and the creation of a decantation chamber in which an extraction pump is installed.
f) In order to assure that the solid material in suspension in the water, which is situated in the decantation chamber, is reprocessed until a neutral pH is obtained in the first Reactor, an extraction pump is installed in the decantation chamber, this pump is connected to a monitoring system, and a dosing apparatus with whiting which extracts the water with solid material in suspension, and through an appropriate pipe, recirculates it to the entry mouth of the Reactor.
g) The monitoring system linked to the recirculation extraction pump and the dosing apparatus of the whiting of the first Reactor activates or decelerates the recirculation of the solid material, and in case of instability risk, releases whiting (maximum, in or around 100 gr./m³), as long as the outflow water to the second reactor has a pH that is outside a range of between 6.5 and 7.5. The instability risk may arise when circumstances external to the system (such as, for example, rain or malfunctioning) produce a spill flow or an altered compound that make the functioning of the recirculation apparatus by extractor pump either ineffective or impossible.
h) In this way, the monitored circulation mechanism of the first Reactor, linked to a computer and a pH meter, as well as a whiting dosing apparatus or another base, is that which guarantees the pH level of the water outflow at the first Reactor.

As a consequence of the above, the first reactor is fitted with an inverse decantation wall and two extraction pumps at different heights, the first being used to extract the compounds with heavy metals to an elimination deposit for highly sedimented fertiliser matter, and the second pump to recirculate the spill with medium suspended material towards a space where the Fixed Bed acts, in such a way that the outflow towards the second reactor is highly treated by the action of the acidogenic bacteria themselves. The high rate of reproduction of said bacteria allows for a large reduction of size in the volume of the first reactor with respect to the entry flow per day as compared to already existing models in the previous technological state (the proportion of the reactor volume has to be between 1.5 and 3 with respect to the volume of the daily incoming flow) and the fact that said bacteria are immune to pH acid and are capable of digesting the organic substance that contains it, and of releasing with their action the molecules that contain the heavy metals, produces, as an essential effect, a neutralisation of the pH and the elimination of the metals of the water that is spilled into the second Reactor, this with a Fluidised Bed, which is where the highly pH sensitive methanogenic bacteria reside, which receive, therefore, a pH neutral spill with no metals, which makes the microbacterial stabilisation of the process possible, thus definitively resolving the previous problem of their habitat incompatibility with the acidogenic bacteria of the first Reactor, which in the previous technological state had to live together biologically in the same habitat.

The second reactor has an inverse decantation wall beside the water entrance in order to make the flow pass over a Fluidised Bed (not Fixed) of ecume de mer or expanded clay which is recommended for the fixation of the methanogenic bacteria, and the flow, once it has been displaced, comes across a second and third direct decantation wall, between which a pump is placed which is fitted with a pipe in order to permit the recirculation of the fluid to space contained by the first inverse wall, thus improving the performance of the digester, and a second pump, that may be substituted by physical gravity decantation for the expulsion of the outflow spill towards a first laminated decanter whose precipitates are eliminated into a fertiliser sub-production tank. Said laminated tank, as well as decanting the spill is also useful in the sub-production of fertiliser. The decanted spill coming from the laminated decanter comes to an anti-foaming aerator suitable for denitrifying the spill, and given its specific denitration purpose it cannot be classified in the strictest sense as an aerobic digester, even though its design contributes to the precipitation of waste organic or inorganic matter. The elimination of foam due to the presence of lignin is achieved by means of an oil doser apparatus, or any other anti-foam product. The aerator is fitted with a precipitation system and the outflow spill is unloaded into a second and final laminated decanter whose precipitates, because they contain a high density of bacterial biomass, are recirculated to the entrance of the first Reactor so as to avoid their loss, giving rise to an outflow with treatment percentages of 97%- 98% in soluble COD %, of high environmental quality, given that it does not produce contaminating smells and because it possesses an optimum energy and clean sub-product production capacity.

The optimisation of the reproductive capacity of each bacterial group is an essential characteristic of the system, thus an increase in the density of the organic load at entry produces an overfeed and overproduction effect, which in turn produces the stabilisation and self-regulation effect of the system for various load levels, along with the natural fixation of each group of bacteria, without artificial industrial intervention, in the Reactor most appropriate for its habitat, fitted with a Fixation Bed suitable for each group.

The two reactors are fitted with pipe extractors for the biogas produced in the process, with a turbo motor that acts on the gas pressure leading it to a gas tank, and from this to a heat producing thermal station by means of gas, which supplies the closed heating circuit of the Reactors.

The installation unit and the process can be controlled by computer, which adjusts and regulates the action of the heat thermocouples in order to maintain the temperature. The plant, on noticeably reducing the volume of each Reactor with respect to the incoming flow volume per day, may be of a compact modular design in transportable metal bodies, which makes it possible to be produced en masse, with the consequent cost saving.

### Description of the drawings

Figure 1 shows a control and homogenisation reservoir with a flat base, inclined so as to sediment the larger solid matter, connected to a Strainer (Fig.2) which discriminates the size of the solid particles.
Figure 3 shows the first anaerobic Reactor, inside which the fixed bed plate is placed (Fig.4) as well as two extraction pumps, one for the extraction of precipitation sub-products and the other for the recirculation of the water with solid matter in suspension, which is linked to a pH monitoring device (Fig.5).
Figure 6 shows the second anaerobic Reactor fitted with two extraction pumps between decantation walls, the first is for the recirculation of the spill water, while the second is for the extraction of treated water (Fig.7).
Figure 8 shows the first laminated decanter fitted with a precipitate expulsion pipe to the fertiliser deposit (Fig. 17)
Figure 9 shows the aerator.
Figure 10 shows the second laminated decanter and the recirculation pipe of the bacterial biomass to the entrance of the system.
Figure 11 shows the biogas extraction pipes that come from the reactors to a gas tank (Fig.12), fitted with a release device for excess gas in the case of high pressure (Fig. 13).
Figure 14 shows a vapour production station by means of the gas produced in the plant connected to a Reactor heating circuit (Fig.15) fed by water (Fig. 16).
Figure 17 shows a fertiliser tank eliminated as a sub-product.

### Instructions as to the best way of bringing the invention into effect

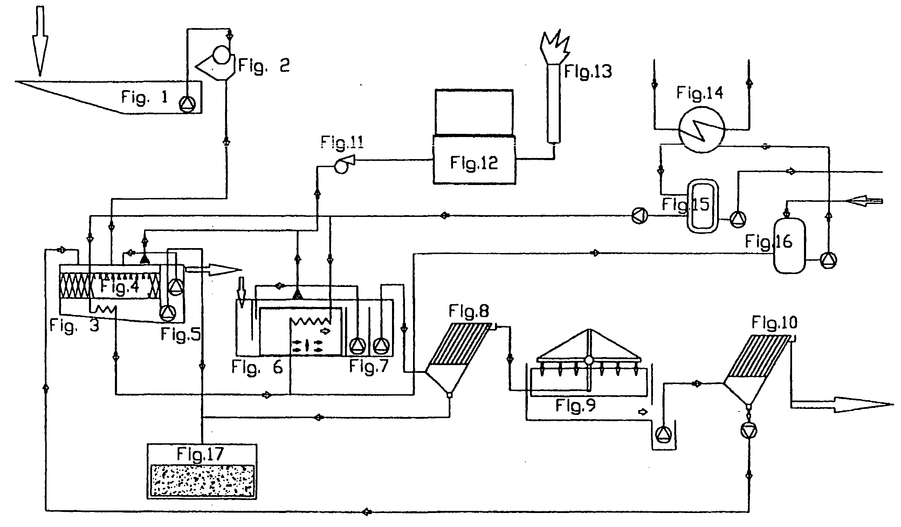

The homogenisation and reception reservoir (Fig.1) controls the incoming spill flow of the wastewater by means of an inclined flat base for sedimentation and the elimination of solids that are bigger than a given size. The reservoir is connected to a strainer (Fig.2) which discriminates the particles, selecting those no bigger than 3 mm., recirculating the bigger ones to the homogenisation reservoir (Fig.1).

The spill flow enters the first hermetically sealed monitored anaerobic reactor through a pipe (Fig.3) that is fitted with hydraulic safety locks in order to avoid the high pressure of the methane gas. In a first interior chamber an inverse decantation wall is suspended at medium height hanging from the base of the upper fixed bed, preferably made of fired clay on mesh plate which allows for the circulation of the water spill through the holes (Fig.4) destined for the fixation of the acidogenic bacteria, said Reactor being fitted with a heating coil in a closed heater circuit linked to a vapour station that uses the plant biogas (Fig.14) and to a heating station (Fig.15) that uses external water (Fig.16). The purpose of the heating circuit is to maintain the internal temperature of the reactors within a range of between 32° to 35°C which is the optimum for the implantation, development and reproduction of the bacterial population of the reactors.

The first Reactor of Fig. 3 has to have a capacity of between 1.5 and 3 times the daily incoming volume of wastewater, which is regulated by means of the reception reservoir of Fig.1. In general, said first Reactor has to have a capacity equivalent to multiplying the daily incoming volume of wastewater by the Hydraulic Residence Time, measured in days of process duration.

The first Reactor supports the clay fixed bed of an inverse decantation wall which forms a an internal decantation chamber with two extraction pumps. The first pump is destined to the extraction of insoluble precipitate compounds (heavy metals and others) into an elimination deposit as fertiliser (Fig.17). The second pump is linked to a pH meter, a computer, a whiting doser or other alkaline base and to a monitoring programme, and its function is to recirculate the water with solid matter in medium suspension (Fig. 15) up to the entrance of the Reactor.

The computer monitoring quickens up or decelerates the recirculation of the water with solid matter in suspension and releases, if required, whiting or another base, until getting a neutral pH range (of between 6.5 and 7.5). In reality, the pH acid is due to the fact that the acidogenic bacterial action fixed onto the Fixed Bed has not digested the solid organic substance in sufficient proportions, and has not broken the large chains of fatty acids or polymers with enough intensity to release the short-chained acids (acetic or others), thus the recirculation of the water with solid matter in suspension to repeat the passing of the fluid through the plate of the Fixed Bed of clay, which houses the bacteria population, increases as many times as the bacterial digestion of the solid matter is repeated, reducing the pH acid. Thus, the monitored programme allows us to reduce the pH, firstly, by boosting or by increasing the circulation, in order to maintain it within a range of 6.5-7, which is that which is required for methanogenic bacteria, by means of a deceleration of the recirculation. In extreme cases in which a system destabilisation risk exists, as a result of the action of the external agents that are not controlled (such as, for example, rain or the presence of abnormal compounds because of a plant malfunction), the monitoring releases whiting by means of a doser (1,000 gr./m³) in order to reduce the acidity, or in the event it may detain the recirculation process and increase the spill of the incoming flow of organic substance activating the reception reservoir extraction pumps of Fig. 1, if it is necessary to reduce alkalinity.

The design of the first Reactor fits it with an inclined base, which, given that the decantation wall is inverse, and that the Fixed Bed bacterial plate is hanging at half height, permits the sliding by gravity of the insoluble precipitate compounds of the heavy metals (carbonates and others) towards a single point where the extraction pump of said compounds acts. which can be substituted by an output physical register for their elimination. The outflow water of the first Reactor, once the heavy metals which are harmful to the bacteria have been eliminated, and a neutral pH has been guaranteed, spills by decantation or by extraction into a second hermetically closed anaerobic Reactor (Fig.6) with hydraulic safety locks, fitted with heating by the same circuit as the first reactor, and has an expanded clay, ecume de mer or other silicate Fluidised Bed (not Fixed) on its base, which is what produces the fixation of the methanogenic bacteria, which digest the glucose and short-chained the acids and release methane (CH₄) in optimum conditions to the same gas tank (Fig.12) Said second Reactor, due to the slower rate of reproduction of the methanogenic bacterial population (>3 days as opposed to <1 day of the first reactor), has to have a size or capacity of between 1.5 and 2 times that of the first reactor, an essential feature, so as to avoid an overpopulation of acidogenic bacteria with respect to methanogenic bacteria, given that the high rate of reproduction of the former is limited by the lesser quantity of organic substance of the first Reactor which feeds them, derived from its smaller capacity, making the operational essence of the process possible, which is bacterial stability as main active agent of the biological wastewater treatment. The pH optimum conditions, the elimination of metals and the fixation by means of the Fluidised Bed, produce an optimum and stable habitat for the methanogenic bacteria, an optimum production of biogas, with the consequent energetic potentiation, and a microbiological degree of efficiency that allows for the reduction of the Hydraulic Residence Time of up to 1-3 days.

The process is self-regulating, given that the greater entry of wastewater flow with organic matter produces an overfeeding effect that increases the bacterial population and the digestive efficiency of the system with the natural elasticity which is derived from the high rate of microbacterial reproduction (the bacteria of the first reactor reproduce in optimum feed conditions in a time lapse of between 30 minutes and two days and those of the second reactor between 2 and 5 days). And in the case of destabilisation by external agents such as the rain or the presence of abnormal compounds, the monitoring system is suitable for stabilising the system again by operating on the internal recirculation of the flow or in the case of the first Reactor, releasing products which stabilise the pH.

Optionally, the spill of the second Reactor flows towards a laminated decanter (Fig.8) which releases by means of its base precipitates into the fertiliser deposit (Fig. 17), and whose spill enters a conventional aerator (Fig.9) by means of decantation in order to denitrify the fluid, and is fitted with an oil or anti-foam doser capable of controlling the foam that is generated on occasions as a result of the effect of the presence of lignin and other compounds in the spill.

The outflow spill finally reaches a second and last laminated decanter (Fig. 10), which through its base recovers the precipitates with bacterial biomass for their re-use in the entry mouth of the first Reactor, whose decantation spill is treated water with a Chemical Oxygen Demand (COD) reduced by 97%-98%, suitable to satisfy the environmental quality control.

The system is completed by a gas tank (Fig.12) that collects the biogas by means of a pipe fitted with a turbo motor to adjust the pressure (Fig. 11), and an excess release system in case of the over-production of gas (Fig.13), which feeds a vapour station (Fig.14), which produces the usable heat in a heating station (Fig. 15) with a circuit that operates on the two Reactors or Digesters, and which uses external water (Fig. 16) and an elimination deposit of usable sub-products such as clean treated fertiliser (Fig. 17).

### The industrial applicability of the invention

The patent under proposal may be used industrially. It can be used in the environment industry and the biological anaerobic wastewater treatment industry, for the wastewater coming from both livestock, as well as areas of human population.

## Claims

1. WASTEWATER BIOLOGICAL TREATMENT PLANT WITH TWO ANAEROBIC DIGESTERS consisting of a computer monitored double anaerobic reactor installation, **characterised by** being fitted with two independent anaerobic reactor bodies ( 3 and 6) , combined and monitored, hermetically sealed and fitted with hydraulic safety locks (11), the first one being 1.5 to 3 times bigger in volume size than the volume of the daily wastewater entry flow, which is regulated by a reception and homogenisation reservoir(1) , this reservoir having an inclined base for the precipitation of heavy solids and an agitator to maintain the suspension of the matter, and fitted with a strainer (2) which discriminates the organic particles of 3 mm returning the solids bigger in size by circuit to the reception reservoir, and the second Digester or Reactor 1.5 times the volume of the first Reactor. The first Digester must have a fixed bed of fired clay (4) , mixed or not with écume de mer, or another fixed bed on a similar meshed plate, parallel to the larger bases, and suitable for fixing the acidogenic bacteria, both hydrolytic and fermentative, the support of the Bed being suspended at medium height from an inverse decantation wall, the first Reactor (3) having an inclined lower base in order to permit the precipitation of insoluble heavy metal compounds and non biodegradable products produced by the digestion of long-chained fatty acids and polymers of the acidogenic bacteria, the insoluble solids being eliminated by gravity towards a register or an extraction pump(5) which expulses them into an auxiliary fertiliser tank (17) with biological gas outlet spouts to a gas tank( 12) and a thermal station of heat production ( 14 and 15) by means of the gas produced which will feed a closed heater circuit (16) that maintains the temperature of the reactor in a range of between 32°C and 35°C, this first Reactor being fitted with, in a decantation chamber, a second pump, a pH meter and a whiting, or other base doser linked to a programme monitored by a computer, the pump being at a suitable height to make the insufficiently processed spill with solid matter in medium suspension recirculate through a conduit to the feed entry of the Reactor, which is accelerated or decelerated by the monitoring action, and if the case requires, to activate the whiting or other base doser in order to guarantee a pH close to neutral at the mouth of the first Reactor outlet of between 6.5 and 7.5, which is ideal for the habitat of the methanogenic bacterial population housed in the second Reactor ( 6) , in such a way that the first reactor makes the water, already treated for heavy metals, other non biodegradable products, fatty acids and polymers, and with the pH neutralised by the action of the hydrolytic and fermentative bacteria fixed on the Fixed Bed, overflow by decantation to a second anaerobic Reactor (6), equally hermetically sealed and fitted with hydraulic safety locks(11) , with 1.5 times the capacity of the first Reactor (3), the second Reactor(6) being fitted with an ecume de mer Fluidised Bed, other silicates or expanded clays that fix a population of acetoclastic and hydrogenophile Bacteria of methanogenic effect, highly sensitive to the already eliminated heavy metals and to acid pH already neutralised in the first Reactor, this second reactor must be fitted with an inverse decantation wall beside the feed mouth in order to oblige the fluid to run over the Fluidised Bed to a space between the two direct decantation walls between which an extraction pump (7) is situated for the recirculation of the flow linked to a monitored programme capable of increasing or decreasing the recirculation according to the final quality of the final outflow spill, a pump which recirculates the flow to the entrance mouth of the second Reactor optimising the performance of the Digester and permitting the decantation to a final space through which the treated water brims over or is extracted by a second pump to the outside, with the heating coils of the same closed circuit which feeds the same temperature of the first reactor, and with a biological gas outlet spout to the same gas tank (12) which collects the gas of the first Digester, the second Digester must be at a lower height than the first in order to facilitate the spilling over of the decantation spill of the first Reactor, with the optimisation of the feeding and microbacterial reproduction processes in both habitats separated in order to enable the reduction of the Hydraulic Residence Time up to 1 to 3 days, with the subsequent increase in the speed of the process and increase in its efficiency, in order.to obtain at its outlet an elimination of 97%-98% Chemical Oxygen Demand (COD), reducing the relative size of the Reactors and increasing the production of gas and of fertiliser and other sub-products and increasing the dynamic elasticity of the system to adapt the rate of feed and reproduction of the bacterial biomass to the organic volume and density of the load entering the system, with complete stabilisation and self-regulation of the system and a high-quality environmental effect, being possible to construct the Reactors ( 3 and 6) in transportable modules en masse, due to their relatively smaller size

2. WASTEWATER BIOLOGICAL TREATMENT PLANT WITH TWO ANAEROBIC DIGESTERS AND TREATMENT PROCESS according to claim 1 is essentially **characterised by** making the spill flow after leaving the second reactor through a laminated decanter (8) for the precipitation of methanogenic bacteria which are joined by a conduit to the fertiliser sub-product, leading out by decantation to the outflow spill.

3. WASTEWATER BIOLOGICAL TREATMENT PLANT WITH TWO ANAEROBIC DIGESTERS AND TREATMENT PROCESS according to claims 1 and 2 essentially **characterised by** making the flow pass, after coming out of the laminated decanter, through an aerator tank (9) in order to denitrify the spill fitted with a biological tower or a strainer and an oil or anti-foam doser, said aerator being fitted with an inverse decantation wall, an opening and a precipitation deposit of waste that has still not been eliminated, leading out the outflow spill.

4. WASTEWATER BIOLOGICAL TREATMENT PLANT WITH TWO ANAEROBIC DIGESTERS AND TREATMENT PROCESS according to claim 3, essentially **characterised by** making the flow pass through, after having come out of the aerator, a second laminated decanter (10) in order to precipitate, collect and send by a conduit with a force pump the biomass of the bacteria broken away from the process to the mouth of the entrance of the first reactor and to lead out by decantation the final treated outflow spill.

5. WASTEWATER BIOLOGICAL TREATMENT PLANT WITH TWO ANAEROBIC DIGESTERS AND TREATMENT PROCESS according to claim 1 essentially **characterised by** the inclusion of a dosing and dispensing device, in the first reactor, of a catalysing additive of the biogas production

6. WASTEWATER BIOLOGICAL TREATMENT PROCESS WITH TWO ANAEROBIC DIGESTERS consisting of a computer monitored biological anaerobic wastewater treatment procedure with organic waste, **characterised by** being fitted with two independent anaerobic reactor bodies,(3 and 6) combined and monitored, hermetically sealed and fitted with hydraulic safety locks (11) , the first one being 1.5 to 3 times bigger in volume size than the volume of the daily wastewater entry flow, which is regulated by a reception and homogenisation reservoir (1) , this reservoir having an inclined base for the precipitation of heavy solids and an agitator to maintain the suspension of the matter, and fitted with a strainer (2) which discriminates the organic particles of 3 mm returning the solids bigger in size by circuit to the reception reservoir, and the second Digester or Reactor 1.5 times the volume of the first Reactor. The first Digester must have a fixed bed of fired clay (4) , mixed or not with écume de mer, or another fixed bed on a similar meshed plate, parallel to the larger bases, and suitable for fixing the acidogenic bacteria, both hydrolytic and fermentative, the support of the Bed being suspended at medium height from an inverse decantation wall, the first Reactor ( 3) having an inclined lower base in order to permit the precipitation of insoluble heavy metal compounds and non biodegradable products produced by the digestion of long-chained fatty acids and polymers of the acidogenic bacteria, the insoluble solids being eliminated by gravity towards a register or an extraction pump (5) which expulses them into an auxiliary fertiliser tank (17) with biological gas outlet spouts to a gas tank (12) and a thermal station of heat production ( 14 and 15) by means of the gas produced which will feed a closed heater circuit (16) that maintains the temperature of the reactor in a range of between 32°C and 35°C, this first Reactor being fitted with, in a decantation chamber, a second pump, a pH meter and a whiting, or other base doser linked to a programme monitored by a computer, the pump being at a suitable height to make the insufficiently processed spill with solid matter in medium suspension recirculate through a conduit to the feed entry of the Reactor, which is accelerated or decelerated by the monitoring action, and if the case requires, to activate the whiting or other base doser in order to guarantee a pH close to neutral at the outlet mouth of the first Reactor outlet of between 6.5 and 7.5, which is ideal for the habitat of the methanogenic bacterial population housed in the second Reactor (6), in such a way that the first reactor makes the water, already treated for heavy metals, other non biodegradable products, fatty acids and polymers, and with the pH neutralised by the action of the hydrolytic and fermentative bacteria fixed on the Fixed Bed, overflow by decantation to a second anaerobic Reactor (6), equally hermetically sealed and fitted with hydraulic safety locks (11), with 1.5 times the capacity of the first Reactor (3) , the second Reactor (6) being fitted with an écume de mer Fluidised Bed, other silicates or expanded clays that fix a population of acetoclastic and hydrogenophile Bacteria of methanogenic effect, highly sensitive to the already eliminated heavy metals and to acid pH already neutralised in the first Reactor, this second reactor must be fitted with an inverse decantation wall beside the feed mouth in order to oblige the fluid to run over the Fluidised Bed to a space between the two direct decantation walls between which an extraction pump (7) is situated for the recirculation of the flow linked to a monitored programme capable of increasing or decreasing the recirculation according to the final quality of the final outflow spill, a pump which recirculates the flow to the entrance mouth of the second Reactor optimising the performance of the Digester and permitting the decantation to a final space through which the treated water brims over or is extracted by a second pump to the outside, with the heating coils of the same closed circuit which feeds the same temperature of the first reactor, and with a biological gas outlet spout to the same gas tank ( 12) which collects the gas of the first Digester, the second Digester must be at a lower height than the first in order to facilitate the spilling over of the decantation spill of the first Reactor, with the optimisation of the feeding and microbacterial reproduction processes in both habitats separated in order to enable the reduction of the Hydraulic Residence Time up to 1 to 3 days, with the subsequent increase in the speed of the process and increase in its efficiency, in order to obtain at its outlet an elimination of 97%-98% Chemical Oxygen Demand (COD), reducing the relative size of the Reactors and increasing the production of gas and of fertiliser and other sub-products and increasing the dynamic elasticity of the system to adapt the rate of feed and reproduction of the bacterial biomass to the organic volume and density of the load entering the system, with complete stabilisation and self-regulation of the system and a high-quality environmental effect.

## Patentansprüche

1. ANLAGE ZUR BIOLOGISCHEN ABWASSERBEHANDLUNG MIT ZWEI ANAEROBEN REAKTOREN, bestehend aus einer computergesteuerten Anlage mit einem anaeroben Doppelreaktor, die sich dadurch auszeichnet, dass sie mit zwei unabhängigen, kombinierten und überwachten anaeroben Reaktorkörpern (3 und 6) ausgestattet ist, welche luftdicht verschlossen und mit hydraulischen Sicherheitsverschlüssen (11) versehen sind, wobei der erste Reaktor über ein 1,5 bis 3 Mal größeres Volumen verfügt als das Volumen des täglichen Zuflusses an Abwasser, welcher durch ein Aufnahme- und Homogenisierungsbecken (1) geregelt wird, wobei besagtes Becken eine geneigte Grundfläche zur besseren Ausfällung von schweren Feststoffen sowie ein Rührwerk zur Aufrechterhaltung der Aufschlämmung besitzt und mit einem Rotationsfilter (2) ausgestattet ist, der organische Partikel mit einer Größe von bis zu 3 mm durchlässt und größere Feststoffpartikel über einen gesonderten Kreislauf in das Aufnahmebecken zurückbefördert, sowie ein zweiter Reaktor, der das 1,5fache Volumen des ersten Reaktors hat. Der erste Reaktor muss ein Festbett aus gebranntem Ton (4) haben, welcher mit Sepiolith gemischt sein kann oder nicht, bzw. ein anderes Festbett auf einer vergleichbaren Rasterplatte, das parallel zu den längeren Seiten verläuft, und zum Binden der säurebildenden Bakterien, sowohl der hydrolytischen als auch der fermentierenden dient, wobei die Abstützung des Betts, das auf halber Höhe einer invertierten Dekantierwand angebracht ist, und der erste Reaktor (3) über eine geneigte Bodenfläche verfügt, um die Ausfällung von unlöslichen Schwermetallverbindungen und nicht biologisch abbaubaren Produkten, die aus dem Aufschluss von langkettigen Fettsäuren und Polymeren durch die säurebildenden Bakterien stammen, zu ermöglichen, wobei die unlöslichen Feststoffe durch Schwerkraft in ein Auffangbecken oder zu einer Förderpumpe (5) geleitet werden, welche diese in einen beigestellten Düngerbehälter (17) mit Abzugsrohr zu einem Gassammelbehälter (12) und einem Heizstation befördert, wo aus dem entstandenen Gas Hitze erzeugt wird (14 und 15), welche wiederum einen geschlossenen Heizungskreislauf (16) speist, der die Temperatur des Reaktors im Bereich von 32°C bis 35°C aufrechterhält, wobei dieser erste Reaktor über eine zweite Pumpe in einer Klärkammer, ein pH-Messgerät und einen Dosierapparat für kohlensauren Kalk oder eine andere basische Substanz verfügt, die allesamt von einem Computerprogramme gesteuert und überwacht werden. Die Pumpe ist dabei auf einer passenden Höhe angebracht, um das ungenügend aufbereitete Abwasser mit Feststoffgehalt in mittlerer Suspension über eine separate Rohrleitung zum Eingang des Reaktors zurückzuleiten. Die Steuerung kann diesen Prozess beschleunigen oder abbremsen, und bei Bedarf ebenfalls die Dosiereinrichtung für kohlesauren Kalk oder eine andere basische Substanz aktivieren, um am Ausgang des ersten Reaktors einen möglichst neutralen pH-Wert zwischen 6,5 und 7,5 sicherzustellen, der ideal ist als Habitat für die methanogenen Bakterien im zweiten Reaktor (6), so dass also der erste Reaktor das bereits von Schwermetallen, sonstigen nicht biologisch abbaubaren Produkten, Fettsäuren und Polymeren geklärte Wasser, dass einen durch die Aktion der hydrolytischen und fermentativen Bakterien des Festbetts neutralisierten pH-Wert aufweist, mittels Dekantieren in einen zweiten, anaeroben, ebenfalls luftdicht verschlossenen und mit hydraulischen Sicherheitsverschlüssen (11) ausgestatten Reaktor (6) überfließen lässt, der das 1,5fache Fassungsvermögen des ersten Reaktors (3) besitzt, wobei der zweite Reaktor (6) über ein Flüssigbett aus Sepiolith, anderen Silikaten oder expandiertem Ton verfügt, das eine Population aus acetoklastischen und hydrogenophilen Bakterien mit methanogener Wirkung beherbergt, die hochempfindlich gegenüber den bereits eliminierten Schwermetallen und gegenüber einem bereits im ersten Reaktor neutralisierten sauren pH-Wert sind. In diesem zweiten Reaktor muss direkt am Zufluss eine invertierte Dekantierwand angebracht sein, damit das Wasser zwingend über das Flüssigbett in einen Raum zwischen zwei direkten Dekantierwänden fließen muss, zwischen denen sich eine Förderpumpe (7) für den Flüssigkeitsumlauf befindet, die von einem Programm gesteuert wird, das in der Lage ist, den Umlauf in Abhängigkeit der Qualität des ausströmenden Klärwassers zu beschleunigen oder zu verlangsamen, eine Pumpe, die das Wasser zum Eingang des zweiten Reaktors zurückleitet, und somit die Leistung des Reaktors optimiert und das Dekantieren in einen letzten Raum ermöglicht, aus dem das dekantierte Wasser überläuft oder durch eine zweite Pumpe ins Freie befördert wird, wobei die Heizschlangen desselben Kreislaufes verwendet werden, der die Temperatur des ersten Reaktors liefert, und ebenso das Abzugsrohr für Biogas desselben Gassammelbehälters (12), der das Gas des ersten Reaktors sammelt, wobei sich der zweite Reaktor auf einer geringeren Höhe befinden muss als der erste, um das Überlaufen des dekantierten Wassers des ersten Reaktors zu ermöglichen, all dies mit Optimierung der Prozesse der Zuführung und der Reproduktion der Mikroorganismen in beiden Habitats, die getrennt sind, um die hydraulische Verweilzeit auf 1 bis 3 Tage zu verkürzen, wodurch es zu einer Steigerung der Prozessgeschwindigkeit und der Wirksamkeit kommt, so dass am Ausgang eine Eliminierung von 97%-98% des Chemischen Sauerstoffbedarfs (COD) erzielt wird, die relative Größe der Reaktoren verringert und die Erzeugung von Gas, Dünger und sonstigen Nebenprodukten gesteigert werden kann, ebenso wie die dynamische Elastizität des Systems, was eine bessere Anpassung der Zufuhr- und Reproduktionsrate der bakteriellen Biomasse an das Volumen und die organische Dichte der ins System gelangenden Abwassermengen ermöglicht, wobei eine völlige Stabilisierung und Selbstregulierung des Systems und ein positiver Umwelteffekt erzielt werden, und es möglich ist, die Reaktoren (3 und 6) aufgrund ihrer relativ geringeren Baugröße als transportfähige Module in Serienfertigung herzustellen.

2. ANLAGE ZUR BIOLOGISCHEN ABWASSERBEHANDLUNG MIT ZWEI ANAEROBREAKTOREN UND BEHANDLUNGPROZESS gemäß Anspruch 1, die sich im Wesentlichen dadurch auszeichnet, dass das behandelte Abwasser nach Austritt aus dem zweiten Reaktor durch einen Lamellendekanter (8) fließt, um die methanogenen Bakterien auszufällen, die über eine Rohrleitung dem Nebenprodukt Dünger zugesetzt werden, wobei das behandelte Abwasser durch Dekantieren abließt.

3. ANLAGE ZUR BIOLOGISCHEN ABWASSERBEHANDLUNG MIT ZWEI ANAEROBREAKTOREN UND BEHANDLUNGPROZESS gemäß Ansprüchen 1 und 2, die sich im Wesentlichen dadurch auszeichnet, dass das austretende Wasser nach Durchtritt durch den Lamellendekanter, zur Denitrifikation durch einen Belüftungstank (9) fließt, wobei besagter Belüfter über einen Faulturm bzw. einen Rotationsfilter und eine Dossiereinrichtung für Öl oder ein sonstiges Antischaummittel verfügt, und ferner über eine invertierte Dekantierwand, eine Öffnung und ein Ausfällbecken für zuvor noch nicht eliminierte Reststoffe, aus welchem das behandelte Wasser ins Freie fließt.

4. ANLAGE ZUR BIOLOGISCHEN ABWASSERBEHANDLUNG MIT ZWEI ANAEROBREAKTOREN UND BEHANDLUNGPROZESS gemäß Anspruch 3, die sich im Wesentlichen dadurch auszeichnet, dass das austretende Wasser nach Durchtritt durch den Belüfter, einen zweiten Lamellendekantrer (10) passiert, um die Biomasse mit den vom Prozess ausgeschiedenen Bakterien auszufällen, zu sammeln und über eine Rohrleitung mittels einer Druckpumpe zum Eingang des ersten Reaktors zurückzuführen und das behandelte Abwasser mittels Dekantieren ausfließen zu lassen.

5. ANLAGE ZUR BIOLOGISCHEN ABWASSERBEHANDLUNG MIT ZWEI ANAEROBREAKTOREN UND BEHANDLUNGPROZESS gemäß Anspruch 1, die sich im Wesentlichen dadurch auszeichnet, dass im ersten Reaktor eine Dosier- und Abgabeeinrichtung für einen Katalysatorzusatz zur Biogaserzeugung integriert ist.

6. PROZESS ZUR BIOLOGISCHEN ABWASSERBEHANDLUNG MIT ZWEI ANAEROBEN REAKTOREN, bestehend aus einem computergesteuerten biologischen anaeroben Behandlungsverfahren von Abwasser mit organischen Substanzen, die sich dadurch auszeichnet, dass sie mit zwei unabhängigen, kombinierten und überwachten anaeroben Reaktorkörpern (3 und 6) ausgestattet ist, welche luftdicht verschlossen und mit hydraulischen Sicherheitsverschlüssen (11) versehen sind, wobei der erste Reaktor über ein 1,5 bis 3 Mal größeres Volumen verfügt als das Volumen des täglichen Zuflusses an Abwasser, welcher durch ein Aufnahme- und Homogenisierungsbecken (1) geregelt wird, wobei besagtes Becken eine geneigte Grundfläche zur besseren Ausfällung von schweren Feststoffen sowie ein Rührwerk zur Aufrechterhaltung der Aufschlämmung besitzt und mit einem Rotationsfilter (2) ausgestattet ist, der organische Partikel mit einer Größe von bis zu 3 mm durchlässt und größere Feststoffpartikel über einen gesonderten Kreislauf in das Aufnahmebecken zurückbefördert, sowie ein zweiter Reaktor, der das 1,5fache Volumen des ersten Reaktors hat. Der erste Reaktor muss ein Festbett aus gebranntem Ton (4) haben, welcher mit Sepiolith gemischt sein kann oder nicht, bzw. ein anderes Festbett auf einer vergleichbaren Rasterplatte, das parallel zu den längeren Seiten verläuft, und zum Binden der säurebildenden Bakterien, sowohl der hydrolytischen als auch der fermentierenden dient, wobei die Abstützung des Betts, das auf halber Höhe einer invertierten Dekantierwand angebracht ist, und der erste Reaktor (3) über eine geneigte Bodenfläche verfügt, um die Ausfällung von unlöslichen Schwermetallverbindungen und nicht biologisch abbaubaren Produkten, die aus dem Aufschluss von langkettigen Fettsäuren und Polymeren durch die säurebildenden Bakterien stammen, zu ermöglichen, wobei die unlöslichen Feststoffe durch Schwerkraft in ein Auffangbecken oder zu einer Förderpumpe (5) geleitet werden, welche diese in einen beigestellten Düngerbehälter (17) mit Abzugsrohr zu einem Gassammelbehälter (12) und einem Heizstation befördert, wo aus dem entstandenen Gas Hitze erzeugt wird (14 und 15), welche wiederum einen geschlossenen Heizungskreislauf (16) speist, der die Temperatur des Reaktors im Bereich von 32°C bis 35°C aufrechterhält, wobei dieser erste Reaktor über eine zweite Pumpe in einer Klärkammer, ein pH-Messgerät und einen Dosierapparat für kohlensauren Kalk oder eine andere basische Substanz verfügt, die allesamt von einem Computerprogramme gesteuert und überwacht werden. Die Pumpe ist dabei auf einer passenden Höhe angebracht, um das ungenügend aufbereitete Abwasser mit Feststoffgehalt in mittlerer Suspension über eine separate Rohrleitung zum Eingang des Reaktors zurückzuleiten. Die Steuerung kann diesen Prozess beschleunigen oder abbremsen, und bei Bedarf ebenfalls die Dosiereinrichtung für kohlesauren Kalk oder eine andere basische Substanz aktivieren, um am Ausgang des ersten Reaktors einen möglichst neutralen pH-Wert zwischen 6,5 und 7,5 sicherzustellen, der ideal ist als Habitat für die methanogenen Bakterien im zweiten Reaktor (6), so dass also der erste Reaktor das bereits von Schwermetallen, sonstigen nicht biologisch abbaubaren Produkten, Fettsäuren und Polymeren geklärte Wasser, dass einen durch die Aktion der hydrolytischen und fermentativen Bakterien des Festbetts neutralisierten pH-Wert aufweist, mittels Dekantieren in einen zweiten, anaeroben, ebenfalls luftdicht verschlossenen und mit hydraulischen Sicherheitsverschlüssen (11) ausgestatten Reaktor (6) überfließen lässt, der das 1,5fache Fassungsvermögen des ersten Reaktors (3) besitzt, wobei der zweite Reaktor (6) über ein Flüssigbett aus Sepiolith, anderen Silikaten oder expandiertem Ton verfügt, das eine Population aus acetoklastischen und hydrogenophilen Bakterien mit methanogener Wirkung beherbergt, die hochempfindlich gegenüber den bereits eliminierten Schwermetallen und gegenüber einem bereits im ersten Reaktor neutralisierten sauren pH-Wert sind. In diesem zweiten Reaktor muss direkt am Zufluss eine invertierte Dekantierwand angebracht sein, damit das Wasser zwingend über das Flüssigbett in einen Raum zwischen zwei direkten Dekantierwänden fließen muss, zwischen denen sich eine Förderpumpe (7) für den Flüssigkeitsumlauf befindet, die von einem Programm gesteuert wird, das in der Lage ist, den Umlauf in Abhängigkeit der Qualität des ausströmenden Klärwassers zu beschleunigen oder zu verlangsamen, eine Pumpe, die das Wasser zum Eingang des zweiten Reaktors zurückleitet, und somit die Leistung des Reaktors optimiert und das Dekantieren in einen letzten Raum ermöglicht, aus dem das dekantierte Wasser überläuft oder durch eine zweite Pumpe ins Freie befördert wird, wobei die Heizschlangen desselben Kreislaufes verwendet werden, der die Temperatur des ersten Reaktors liefert, und ebenso das Abzugsrohr für Biogas desselben Gassammelbehälters (12), der das Gas des ersten Reaktors sammelt, wobei sich der zweite Reaktor auf einer geringeren Höhe befinden muss als der erste, um das Überlaufen des dekantierten Wassers des ersten Reaktors zu ermöglichen, all dies mit Optimierung der Prozesse der Zuführung und der Reproduktion der Mikroorganismen in beiden Habitats, die getrennt sind, um die hydraulische Verweilzeit auf 1 bis 3 Tage zu verkürzen, wodurch es zu einer Steigerung der Prozessgeschwindigkeit und der Wirksamkeit kommt, so dass am Ausgang eine Eliminierung von 97%-98% des Chemischen Sauerstoffbedarfs (COD) erzielt wird, die relative Größe der Reaktoren verringert und die Erzeugung von Gas, Dünger und sonstigen Nebenprodukten gesteigert werden kann, ebenso wie die dynamische Elastizität des Systems, was eine bessere Anpassung der Zufuhr- und Reproduktionsrate der bakteriellen Biomasse an das Volumen und die organische Dichte der ins System gelangenden Abwassermengen ermöglicht, wobei eine völlige Stabilisierung und Selbstregulierung des Systems und ein positiver Umwelteffekt erzielt werden.

## Revendications

1. STATION D'ÉPURATION BIOLOGIQUE D'EAUX RÉSIDUELLES PAR DEUX DIGESTEURS ANAEROBIES ET PROCESSUS DE DÉPURATION consistant en une installation monitorisé par informatique de double réacteur anaérobie , essentiellement **caractérisée par** deux réacteurs anaérobies indépendants ( 3 et 6), combinés et monitorisés, hermétiquement fermés et dotés de fermetures hydrauliques de sécurité (11), le premier ayant une taille, en volume, de 1,5 à 3 fois le volume de débit d'eau résiduelle entrant par jour, régulée par un bassin de réception et d'homogénéisation (1) dont la base est inclinée pour la précipitation des solides lourds ; un agitateur maintient la matière en suspension, il est doté d'un filtre tournant (2) qui discrimine des particules organiques de 3 mm, renvoyant par circuit les solides plus importants au bassin de réception et le second Digesteur ou Réacteur de 1,5 fois le volume du premier Réacteur; le premier Digesteur devant avoir un lit fixe en argile (4) cuite mélangée ou non avec de la sépiolite ou autre lit fixe en plaque réticulée similaire, parallèle aux bases supérieures apte à fixer les bactéries acidogéniques hydrolitiques et fermentatives ; le support du lit suspendu étant à mi-hauteur d'un mur de décantation inverse, le premier Réacteur (3) ayant une base inférieure inclinée qui permet la précipitation de composés insolubles de métaux lourds et de produits non biodégradables générés par la digestion d'acides gras et polymères de chaine longue des bactéries acidogéniques ; les éléments insolubles sont éliminés par gravité vers un registre d'élimination ou une pompe d'extraction (5) qui les expulses vers un dépôt auxiliaire d'engrais (17), doté de trémies de sortie de gaz biologique vers un gazomètre (12) et une station thermique de production de chaleur ( 14 et 15) moyennant le gaz produit qui alimente un circuit chauffant fermé (16) qui maintient la température du réacteur à un niveau allant de 32 a 35 °C ; le premier Réacteur est équipé d'une chambre de décantation, d'une deuxième pompem un mesureur de PH et un doseur de carbonate calcique ou autre base associés à un programme monitorisé par ordinateur, la pompe devant être installée à la hauteur pertinente pour permettre de faire recirculer à travers une conduite vers l'entrée d'alimentation du Réacteur le déversement chargé de matière solide en suspension moyenne insuffisamment traitée qui peut être accélérée ou ralentie par l'action de monitorisation et qui active, le cas échéant, le doseur de carbonate calcique ou de l'autre base pour assurer un PH proche du PH neutre dans l'orifice de sortie du premier Réacteur, entre 6,5 et 7,5, niveau idéal pour l'habitat de la population bactérienne méthanogène logée dans le second Réacteur (6) , de sorte que le premier réacteur fasse déborder, par décantation, l'eau épurée des métaux lourds, les autres produits non biodégradables, les acides gras et polymères, avec un PH neutralisé par l'action des bactéries hydraulitiques et fermentatives fixées dans le Lit Fixe, vers un second Réacteur anaérobie (6) , également hermétique et doté de fermetures hydrauliques de sécurité (11), avec une capacité d'1,5 fois celle du premier Réacteur (3) ; le second Réacteur (6) éta.nt doté d'un Lit Fluide de sépiolite, d'autres silicates ou argiles expansées qui fixent une population de Bactéries acétoclastiques et hydrogénophiles à effet méthanogénique hautement sensible aux métaux lourds préalablement éliminés et au PH acide neutralisé dans le premier Réacteur, le second réacteur devant être doté un mur de décantation inverse près de la bouche d'alimentation pour obliger le flux à se déplacer sur le Lit Fluide vers un espace entre deux murs de décantation directs entre lesquels se situe une pompe à extraction (7) pour la recirculation du flux, reliée à un programme monitorisé capable d'augmenter ou de diminuer la recirculation selon la qualité de l'effluent final, pompe qui recircule le flux vers la bouche d'entrée du second Réacteur en optimisant le rendement du Digesteur et en permettant la décantation vers un dernier espace par lequel l'eau décantée déborde ou est extraite par une deuxième pompe vers l'exténeur, avec des serpentins chauffants en circuit fermé comme celui qui alimente la température du premier réacteur ; trémie de sortie du gaz biologique vers le même gazomètre(12) qui reprend les gaz du premier Digesteur, le second Réacteur devant être à une hauteur inférieure à celle du premier pour faciliter le débordement de la matière de décantation du premier Réacteur, avec optimisation des processus d'alimentation et de reproduction microbactérienne dans les deux habitats séparés pour permettre de réduire le Temps Hydraulique de Résidence jusqu'à 1 à 3 jours, avec l'augmentation de vitesse et d'efficacité qui en découle, pour obtenir, à la sortie, une élimination de 97-98% de la Demande Chimique d'Oxygène (DCO), en réduisant la taille relative des Réacteurs et en augmentant la production de gaz, d'engrais et autres sous-produits et en augmentant l'élasticité dynamique du système pour adapter les niveaux d'alimentation et de reproduction de la biomasse bactérienne au volume et à la densité organique du chargement entrant dans le système, avec stabilisation et autorégulation complètes du système et effet environnemental de haute qualité, les Réacteurs ( 3 et 6) étant susceptibles, de par leur taille plus réduite, de construction modulaire en série et de transport.

2. STATION D'ÉPURATION BIOLOGIQUE D'EAUX RÉSIDUELLES PAR DEUX DIGESTEURS ANAÉROBIES ET PROCESSUS DE DÉPURATION selon la revendication 1, essentiellement caractérisée parce qu'elle fait couler le liquide, après la sortie du second réacteur, par un décanteur lamellaire pour la précipitation de bactéries méthanogènes qui s'unissent au sous-produit d'engrais par conduction, permettant l'écoulement, par décantation, du liquide effluent.

3. STATION D'ÉPURATION BIOLOGIQUE D'EAUX RÉSIDUELLES PAR DEUX DIGESTEURS ANAEROBIES ET PROCESSUS DE DÉPURATION selon les revendications 1 et 2, essentiellement caractérisée parce qu'elle fait couler le flux après la sortie du décanteur lamellaire, dans un bassin aérateur pour dénitrifier le liquide, doté d'une tour biologique ou d'un moteur rotatoire et d'un doseur d'huile ou autres antimousse, aérateur équipé d'un mur de décantation inverse, d'une ouverture et d'un dépôt pour précipitation de résidus non éliminés précédemment, permettant la sortie du liquide effluent.

4. STATION D'ÉPURATION BIOLOGIQUE D'EAUX RÉSIDUELLES PAR DEUX DIGESTEURS ANAEROBIES ET PROCESSUS DE DÉPURATION selon la revendication 3, essentiellement caractérisée parce qu'elle fait couler le flux, après la sortie de l'aérateur, vers un second décanteur lamellaire pour précipiter, récupérer et envoyer par un conduit à pompe la biomasse de bactéries émanant du processus, jusqu'à une bouche d'entrée du premier Réacteur et permettre la sortie, par décantation, du liquide effluent épuré final.

5. STATION D'ÉPURATION BIOLOGIQUE D'EAUX RÉSIDUELLES PAR DEUX DIGESTEURS ANAEROBIES ET PROCESSUS DE DÉPURATION selon la revendication 1, essentiellement caractérisée parce qu'elle inclut un dispositif doseur et distributeur dans le premier Réacteur d'un additif caractérisant la production de biogaz.

6. PROCESSUS D'ÉPURATION BIOLOGIQUE D'EAUX RÉSIDUELLES AVEC DEUX DIGESTEURS ANAEROBIES consistant en un processus de dépuration d'eaux résiduelles monitorisé par informatique, essentiellement **caractérisée par** être doté avec deux réacteurs anaérobies indépendants ( 3 et 6), combinés et monitorisés, hermétiquement fermés et dotés de fermetures hydrauliques de sécurité (11), le premier ayant une taille, en volume, de 1,5 à 3 fois le volume de débit d'eau résiduelle entrant par jour, régulée par un bassin de réception et d'homogénéisation (1) dont la base est inclinée pour la précipitation des solides lourds avec un agitateur qui maintient la matière en suspension, doté d'un filtre tournant (2) qui discrimine des particules organiques de 3 mm, renvoyant par circuit les solides plus importants au bassin de réception et le second Digesteur ou Réacteur de 1,5 fois le volume du premier Réacteur; le premier Digesteur devant avoir un lit fixe en argile (4) cuite mélangée ou non avec de la sépiolite ou autre lit fixe en plaque réticulée similaire, parallèle aux bases supérieures apte à fixer les bactéries acidogéniques, hydrolitiques et fermentatives ; le support du lit suspendu étant à mi-hauteur d'un mur de décantation inverse, le premier Réacteur (3) ayant une base inférieure inclinée qui permet la précipitation de composés insolubles de métaux lourds et de produits non biodégradables générés par la digestion d'acides gras et polymères de chaine longue des bactéries acidogéniques ; les éléments insolubles sont éliminés par gravité vers un registre d'élimination ou une pompe d'extraction (5) qui les expulses vers un dépôt auxiliaire d'engrais (17), doté de trémies de sortie de gaz biologique vers un gazomètre (12) et une station thermique de production de chaleur ( 14 et 15) moyennant le gaz produit qui alimente un circuit chauffant fermé (16) qui maintient la température du réacteur à un niveau allant de 32 a 35 °C ; le premier Réacteur est équipé d'une chambre de décantation, d'une deuxième pompe, un mesureur de PH et un doseur de carbonate calcique ou autre base associés à un programme monitorisé par ordinateur, la pompe devant être installée à la hauteur pertinente pour permettre de faire recirculer à travers une conduite vers l'entrée d'alimentation du Réacteur le déversement chargé de matière solide en suspension moyenne insuffisamment traitée qui peut être accélérée ou ralentie par l'action de monitorisation et qui active, le cas échéant, le doseur de carbonate calcique ou de l'autre base pour assurer un PH proche du PH neutre dans l'orifice de sortie du premier Réacteur, entre 6,5 et 7,5, niveau idéal pour l'habitat de la population bactérienne méthanogène logée dans le second Réacteur (6) , de sorte que le premier réacteur fasse déborder, par décantation, l'eau épurée des métaux lourds, les autres produits non biodégradables, les acides gras et polymères, avec un PH neutralisé par l'action des bactéries hydraulitiques et fermentatives fixées dans le Lit Fixe, vers un second Réacteur anaérobie (6) , également hermétique et doté de fermetures hydrauliques de sécurité (11), avec une capacité d'1,5 fois celle du premier Réacteur (3); le second Réacteur (6) étant doté d'un Lit Fluide de sépiolite, d'autres silicates ou argiles expansées qui fixent une population de Bactéries acétoclastiques et hydrogénophiles à effet méthanogénique hautement sensible aux métaux lourds préalablement éliminés et au PH acide neutralisé dans le premier Réacteur, le second réacteur devant être doté un mur de décantation inverse près de la bouche d'alimentation pour obliger le flux à se déplacer sur le Lit Fluide vers un espace entre deux murs de décantation directs entre lesquels se situe une pompe à extraction (7) pour la recirculation du flux, reliée à un programme monitorisé capable d'augmenter ou de diminuer la recirculation selon la qualité de l'effluent final, pompe qui recircule le flux vers la bouche d'entrée du second Réacteur en optimisant le rendement du Digesteur et en permettant la décantation vers un dernier espace par lequel l'eau décantée déborde ou est extraite par une deuxième pompe vers l'extérieur, avec des serpentins chauffants en circuit fermé comme celui qui alimente la température du premier réacteur ; trémie de sortie du gaz biologique vers le même gazomètre(12) qui reprend les gaz du premier Digesteur, le second Réacteur devant être à une hauteur inférieure à celle du premier pour faciliter le débordement de la matière de décantation du premier Réacteur, avec optimisation des processus d'alimentation et de reproduction microbactérienne dans les deux habitats séparés pour permettre de réduire le Temps Hydraulique de Résidence jusqu'à 1 à 3 jours, avec l'augmentation de vitesse et d'efficacité qui en découle, pour obtenir, à la sortie, une élimination de 97-98% de la Demande Chimique d'Oxygène (DCO), en réduisant la taille relative des Réacteurs et en augmentant la production de gaz, d'engrais et autres sous-produits et en augmentant l'élasticité dynamique du système pour adapter les niveaux d'alimentation et de reproduction de la biomasse bactérienne au volume et à la densité organique du chargement entrant dans le système, avec stabilisation et autorégulation complètes du système et effet environnemental de haute qualité.
